Europäisches Patentamt

European Patent Office

Office européen des brevets

(11) Veröffentlichungsnummer: **0 366 925**

A2

## (12) EUROPÄISCHE PATENTANMELDUNG

(21) Anmeldenummer: **89117617.4**

(51) Int. Cl.⁵: **C08G 18/82 , B29C 71/00**

(22) Anmeldetag: **23.09.89**

(30) Priorität: **06.10.88 DE 3833976**

(43) Veröffentlichungstag der Anmeldung:
**09.05.90 Patentblatt 90/19**

(84) Benannte Vertragsstaaten:
**BE DE ES FR GB IT NL SE**

(71) Anmelder: **BAYER AG**

**D-5090 Leverkusen 1 Bayerwerk(DE)**

(72) Erfinder: **Rasshofer, Werner, Dr.**
**Leopold-Gmelin-Strasse 31**
**D-5000 Köln 80(DE)**
Erfinder: **Wagner, Joachim, Dr.**
**Semmelweisstrasse 135**
**D-5000 Köln 80(DE)**

(54) **Verfahren zur Oberflächenmodifizierung von Formteilen und die so erhaltenen Formteile.**

(57) Ein Verfahren zur Oberflächenmodifizierung von nach der Reaktionsspritzgußtechnik hergestellten Formteilen auf Basis von Polyisocyanat-Polyadditionsprodukten durch Erhitzen der Oberfläche auf mindestens 80°C und gleichzeitige oder anschließende Einwirkung von Druck.

EP 0 366 925 A2

EP 0 366 925 A2

**Verfahren zur Oberflächenmodifizierung von Formteilen und die so erhaltenen Formteile**

Die vorliegende Erfindung betrifft ein Verfahren zur Modifizierung der Oberfläche von Formteilen auf Basis von Polyisocyanat-Polyadditionsprodukten durch Einwirkung von Hitze und gegebenenfalls Druck auf die zu modifizierende Oberfläche und die so erhaltenen Formkörper mit modifizierter Oberfläche.

Fahrzeuge, insbesondere Automobile werden in immer größerem Umfang mit Formteilen auf Basis von Polyisocyanat-Polyadditionsprodukten, d.h. auf Polyurethan-und/oder Polyharnstoff-Basis ausgestattet. Hierzu gehören z.B. Stoßfänger, Kotflügel, Seitenleisten, Türblätter, Schweller oder andere Außenteile.

Eine wesentliche Voraussetzung für den Einsatz derartiger Formteile im Karosseriebau ist eine einwandfreie Oberflächenbeschaffenheit, so daß die Nacharbeit- und Nachlackierquote bei der Serienfertigung auf ein Minimum reduziert werden kann.

Die nach den bekannten Methoden der Reaktionsspritzgußtechnik (vgl. z.B. DE-AS 26 22 951, DE-OS 3 133 859, US-PS 4 065 410, US-PS 4 218 543 oder EP-B 0 081 701) in geschlossenen Formen hergestellten Formkörper weisen jedoch oftmals inhomogene Oberflächen auf, die diesem Anliegen der Praxis zuwiderlaufen.

Überraschenderweise wurde nun jedoch gefunden, daß eine ganz wesentliche Oberflächenverbesserung bei diesen Formteilen möglich ist, wenn die Oberflächen einer Wärmeeinwirkung, gegebenenfalls zusammen mit einer Druckeinwirkung ausgesetzt werden.

Gegenstand der Erfindung ist demzufolge ein Verfahren zur Oberflächenmodifizierung von nach dem Polyisocyanat-Polyadditionsverfahren durch Umsetzung von

A) organischen Polyisocyanaten mit

B) Verbindungen des Molekulargewichtsbereichs 401 bis 20 000 welche 2 bis 8 gegenüber Isocyanatgruppen reaktionsfähige Gruppen aufweisen und

C) Verbindungen des Molekulargewichtsbereichs 60 bis 400, die 2 bis 8 gegenüber Isocyanatgruppen reaktionsfähige Gruppen aufweisen

gegebenenfalls unter Mitverwendung von

D) den aus der Polyurethanchemie bekannten Hilfs- und Zusatzstoffen

in geschlossenen Formen hergestellten Formteilen, dadurch gekennzeichnet, daß man die zu modifizierende, d.h. zu verbessernde Oberfläche unter Einschmelzung und Einebnung der mikroskopischen Oberflächenstruktur auf eine Temperatur von mindestens 80°C erhitzt und gegebenenfalls gleichzeitig oder anschließend durch die Anwendung von äußerem Druck die hierdurch bewirkte Glättung der Oberfläche unterstützt.

Gegenstand der Erfindung sind auch die nach diesem Verfahren erhaltenen Formteile.

Die Herstellung der erfindungsgemäß einer Oberflächenbehandlung zu unterziehenden Formteile erfolgt nach den an sich bekannten Methoden der Reaktionsspritzgußtechnik durch Umsetzung der genannten Ausgangsmaterialien A) bis C) in geschlossenen Formen, wobei gegebenenfalls die üblichen Hilfs- und Zusatzmittel D) mitverwendet werden. Die beim erfindungsgemäßen Verfahren einzusetzenden Formteile weisen im allgemeinen eine Rohdichte von über 0,7 $g/cm^3$, vorzugsweise von 0,8 bis 1,4 $g/cm^3$, und besonders bevorzugt von 1,0 bis 1,3 $g/cm^3$ auf, d.h., es handelt sich bei den Formkörpern im allgemeinen um massive oder allenfalls mikroporöse Elastomere, wie sie beispielsweise nach dem Verfahren der oben zitierten Veröffentlichungen zugänglich sind.

Für das erfindungsgemäße Verfahren besonders gut geeignet sind solche Formkörper, die durch Umsetzung von

a) (cyclo)aliphatischen oder aromatischen Polyisocyanaten,

b) Verbindungen mit einem Molekulargewicht zwischen 1800 und 12 000, welche im statistischen Mittel mindestens 2,5 gegenüber Isocyanatgruppen reaktionsfähige Gruppen aufweisen,

gegebenenfalls

c) Diaminen mit zwei primären und/oder sekundären aromatisch gebundenen Aminogruppen des Molekulargewichtsbereichs 108 bis 400,

sowie gegebenenfalls

d) Ethergruppen aufweisenden (Cyclo)alkanpolyolen oder (Cyclo)alkanpolyaminen des Molekulargewichtsbereichs 60 bis 1799

sowie gegebenenfalls unter Mitverwendung von

e) den aus der Polyurethanchemie an sich bekannten Hilfs- und Zusatzmitteln

unter Einhaltung einer Isocyanatkennzahl von 60 bis 140 im Ein- oder Mehrstufenverfahren hergestellt worden sind, wobei jedoch mindestens eine der Komponenten c) oder d) ein von 60 bis 400 liegendes Molekulargewicht aufweist und in einer solchen Menge mitverwendet worden ist, daß die Gesamtmenge an

2

Komponenten c) und d) dieses Molekulargewichtsbereichs mindestens 5 Gew.-%, bezogen auf das Gewicht der Komponente b) beträgt.

Geeignete aromatische Polyisocyanate a) sind insbesondere die in EP-B 0 081 701, Kolonne 3, Zeile 30 bis Kolonne 4, Zeile 25 genannten Verbindungen, wobei die dort als bevorzugt herausgestellten Polyisocyanate auch im Rahmen der vorliegenden Erfindung bevorzugt sind.

Geeignete (cyclo)aliphatische Polyisocyanate a) sind beliebige organische Diisocyanate eines über 137, vorzugsweise bei 168 bis 290 liegenden Molekulargewichts mit ausschließlich (cyclo)aliphatisch gebundenen Isocyanatgruppen wie beispielsweise 1,6-Diisocyanatohexan, 1,12-Diisocyanatododecan, 1,3-Diisocyanatocyclobutan, 1,3-und 1,4-Diisocyanato-cyclohexan, sowie beliebige Gemische dieser Isomeren, 1-Isocyanato-3,3,5-trimethyl-5-isocyanatomethyl-cyclohexan (IPDI), 2,4- und/oder 4,4'-Diisocyanatodicyclohexylmethan oder beliebige Gemische derartiger einfacher (cyclo)aliphatischer Polyisocyanate. Ebenfalls geeignet sind durch Urethan-, Allophanat-, Isocyanurat-, Harnstoff-, Biuret- und/oder Uretdiongruppen modifizierte Polyisocyanate auf Basis der beispielhaft genannten (cyclo)aliphatischen Diisocyanate oder auf Basis von deren Gemischen. Gemische von unmodifizierten Diisocyanaten mit den genannten modifizierten Polyisocyanaten können ebenfalls als Komponente a) verwendet werden.

Bei der Komponente b) handelt es sich um Verbindungen mit gegenüber Isocyanatgruppen reaktionsfähigen Gruppen des Molekulargewichtsbereichs 1.800 bis 12.000, vorzugsweise 3.000 bis 7.000 oder um Gemische derartiger Verbindungen, wobei die Komponente b) im Sinne der Isocyanat-Additionsreaktion eine über 2,5, vorzugsweise bei 2,6 bis 3,0 und besonders bevorzugt bei 2,8 bis 3,0, liegende (mittlere) Funktionalität aufweist. Besonders gut als Komponente b) geeignete Verbindungen sind, diesen Ausführungen entsprechende, Polyetherpolyole bzw. Gemische von Polyetherpolyolen wie sie in DE-AS 2 622 951, Kolonne 6, Zeile 65 - Kolonne 7, Zeile 47, offenbart sind, wobei auch erfindungsgemäß solche Polyetherpolyole bevorzugt sind, deren Hydroxylgruppen zumindest zu 50 %, vorzugsweise zumindest zu 80 %, aus primären Hydroxylgruppen bestehen. Auch die in DE-AS 2 622 951 beispielhaft offenbarten, Hydroxylgruppen aufweisenden Polyester, Polythioether, Polyacetale, Polycarbonate oder Polyesteramide sind im Prinzip als erfindungsgemäße Komponente b) geeignet, sofern sie den oben gemachten Ausführungen entsprechen, jedoch gegenüber den Polyetherpolyolen weniger bevorzugt.

Als Ausgangskomponente b) ebenfalls gut geeignet sind, obigen Ausführungen entsprechende, Aminopolyether oder Gemische von Aminopolyethern, d.h., Polyether mit gegenüber Isocyanatgruppen reaktionsfähigen Gruppen, die sich zumindest zu 50 Äquivalent-%, vorzugsweise zumindest zu 80 Äquivalent-%, aus primären und/oder sekundären, aromatisch oder aliphatisch, vorzugsweise aromatisch gebundenen Aminogruppen und zum Rest aus primären und/oder sekundären, aliphatisch gebundenen Hydroxylgruppen zusammensetzen. Geeignete derartige Aminopolyether sind beispielsweise die in EP-B-00 81 701, Kolonne 4, Zeile 26 bis Kolonne 5, Zeile 40, genannten Verbindungen.

Ebenfalls als Ausgangskomponente b) geeignet, jedoch weniger bevorzugt, sind Aminogruppen aufweisende Polyester des obengenannten Molekulargewichtsbereichs.

Als Komponente b) können selbstverständlich auch beliebige Gemische der beispielhaft genannten Polyhydroxylverbindungen mit den beispielhaft genannten Aminopolyethern verwendet werden.

Bei der gegebenenfalls mitzuverwendenden Komponente c) handelt es sich um aromatische Diamine der in EP-B-00 81 701, Kolonne 5, Zeile 58 bis Kolonne 6, Zeile 34, beispielhaft genannten Art, wobei auch erfindungsgemäß die dort als bevorzugt herausgestellten Diamine bevorzugt sind.

Bei den gegebenenfalls als weitere Aufbaukomponenten d) mitzuverwendenden Polyolen oder Polyaminen handelt es sich um beliebige nicht-aromatische Verbindungen mit mindestens zwei gegenüber Isocyanatgruppen reaktionsfähigen Gruppen des Molekulargewichtsbereichs 60 bis 1799, vorzugsweise 62 bis 500, insbesondere 62 bis 400. In Betracht kommen beispielsweise mehrwertige Alkohole wie sie in EP-B-00 81 701, Kolonne 9, Zeilen 32 bis 50, offenbart sind. Ferner in Betracht kommen beispielsweise auch Ethergruppen aufweisende aliphatische Polyamine, beispielsweise endständige primäre Aminogruppen aufweisende Polypropylenoxide des genannten Molekulargewichtsbereichs. In Betracht kommen auch cycloaliphatische Ringe aufweisende Polyole wie beispielsweise 1,4-Dihydroxy-cyclohexan oder 1,4-Bis-hydroxymethyl-cyclohexan und Polyamine wie beispielsweise 1,4-Cyclohexan-diamin, Isophorondiamin, Bis-(4-aminocyclohexyl)-methan, Bis-(3-methyl-4-aminocyclohexyl)-methan.

Es ist bevorzugt, daß bei der Herstellung der Elastomeren mindestens eine der Komponenten c) oder d) zur Anwendung gelangt und zwar in solchen Mengen, daß der Gewichtsanteil der Komponenten c) und/oder d), bezogen auf das Gewicht der Komponente b), mindestens 5 Gew.-%, vorzugsweise mindestens 10 Gew.-%, beträgt. Besonders bevorzugt werden dabei Art und Mengenverhältnisse der Komponenten b), c) und/oder d) so bemessen, daß in den Elastomeren das Molverhältnis von Harnstoffgruppen zu Urethangruppen bei mindestens 2:1 liegt. Besonders bevorzugt liegt dieses Verhältnis bei mindestens 5:1.

Bei den bei der Herstellung der Polyisocyanat-Polyadditionsprodukte gegebenenfalls mitzuverwendenden Hilfs-und Zusatzmitteln e) handelt es sich beispielsweise um innere Formtrennmittel, Katalysatoren für die Polyisocyanat-Polyadditionsreaktion, Treibmittel, oberflächenaktive Zusatzstoffe, Zellregler, Pigmente, Farbstoffe, UV-Stabilisatoren, Weichmacher oder fungistatisch bzw. bakteriostatisch wirkende Substanzen, wie sie beispielsweise in EP-B-00 81 701, Kolonne 6, Zeile 40 bis Kolonne 9, Zeile 31, beispielhaft beschrieben sind.

Zu den bevorzugten, gegebenenfalls mitzuverwendenden Hilfs- und Zusatzstoffen gehören die an sich bekannten Füll- und/oder Verstärkungsstoffe wie beispielsweise Bariumsulfat, Kieselgur, Schlämmkreide, Mica oder insbesondere Glasfasern, LC-Fasern, Glasflakes, Glaskugeln, Aramid- oder Kohlefasern, wobei diese Füll- und/oder Verstärkungsstoffe in Mengen von bis zu 80 Gew.-%, vorzugsweise bis zu 30 Gew.-%, bezogen auf das Gesamtgewicht der gefüllten bzw. verstärkten Polyisocyanat-Polyadditionsprodukte mitverwendet werden können.

Die Herstellung der Polyisocyanat-Polyadditionsprodukte erfolgt vorzugsweise nach dem Einstufen-Verfahren dergestalt, daß man die Polyisocyanatkomponente a) mit einem Gemisch der Komponenten b) bis e) unter Verwendung geeigneter Mischapparaturen vermischt und zur Reaktion bringt. Grundsätzlich ist es auch möglich, die Polyisocyanat-Polyadditionsprodukte nach einem "modifizierten Einstufenverfahren" umzusetzen, gemäß welchem man die Polyisocyanat-Komponente a) mit einem Teil der Komponente b) und gegebenenfalls der Komponente d) unter Bildung von NCO-Semiprepolymeren umsetzt, welche anschließend einstufig mit dem Gemisch der restlichen Komponenten zur Reaktion gebracht werden. Auch die Herstellung der Elastomeren nach dem klassischen Prepolymerverfahren ist prinzipiell denkbar. In allen Fällen liegt die NCO-Kennzahl (Anzahl der NCO-Gruppen dividiert durch die Anzahl an NCO-reaktiven Gruppen, multipliziert mit 100) bei 60 bis 140, vorzugsweise bei 80 bis 120, insbesondere 95 bis 115.

Das erfindungsgemäße Verfahren zur Oberflächenmodifizierung kann gemäß verschiedener Ausführungsformen durchgeführt werden. Allen Ausführungsformen gemeinsam ist die Temperatur der der erfindungsgemäßen Behandlung zu unterziehenden Oberfläche, die bei mindestens 80°C, vorzugsweise bei 120 bis 500°C und besonders bevorzugt bei 200 bis 400°C liegt. Diese Oberflächentemperatur kann auf beliebige Weise, beispielsweise durch Einwirken von Mikrowellen, durch Infrarotbestrahlung oder durch Beflammen eingestellt werden. Grundsätzlich möglich ist auch die Druckbehandlung der vorab nicht erhitzten Oberfläche mittels eines auf eine Temperatur innerhalb der genannten Bereiche erhitzten Werkzeugs.

Gemäß einer ersten Ausführungsform der erfindungsgemäßen Verfahrens wird das der erfindungsgemäßen Oberflächenbehandlung zu unterziehende Formteil in der Form belassen, in der es hergestellt worden ist.

Gemäß einer ersten Variante dieser Ausführungsform wird die Form geöffnet und die Oberfläche der Einwirkung einer Wärmequelle ausgesetzt. Danach wird gegebenenfalls mit dem Werkzeugoberteil Druck auf die erhitzte Oberfläche des Formteils ausgeübt.

Gemäß einer zweiten Variante dieser Ausführungsform wird das Werkzeug nach Erreichen der Formstabilität des sich bildenden Formkörpers, jedoch vor Beendigung der exothermen Reaktion geöffnet bzw. der Schließdruck ganz oder im wesentlichen zurückgenommen, so daß zwischen Formteiloberfläche und Werkzeughohlraumoberfläche kein Kontakt mehr besteht, so daß eine Kühlung der Formteiloberfläche durch die Werkzeughohlraumoberfläche unterbleibt. Nach Erhitzen der Formteiloberfläche durch die exotherme Reaktion auf eine Temperatur innerhalb der obengenannten erfindungsgemäßen Temperaturbereiche wird das Formteil erneut geschlossen bzw. der Schließdruck stark erhöht, so daß bei der dann an der Oberfläche vorliegenden Temperatur unter dem durch die Schließung der Form bzw. die Erhöhung des Schließdrucks auf die Formteiloberfläche ausgeübten Druck eine erfindungsgemäße Oberflächenmodifizierung bewirkt wird.

Gemäß einer dritten Variante dieser Ausführungsform bleibt das Werkzeug geschlossen und wird erhitzt, wodurch es zu einer Oberflächenerhitzung und damit -modifizierung kommt.

Gemäß einer zweiten Ausführungsform des erfindungsgemäßen Verfahrens wird das Formteil nach seiner Herstellung der Form entnommen, in oder mit einer geeigneten Vorrichtung zumindest an der erfindungsgemäß zu behandelnden Oberfläche erhitzt und gegebenenfalls in erhitztem Zustand, beispielsweise in einer weiteren geeigneten Form einer Durcheinwirkung ausgesetzt, wobei das hierbei zur Anwendung gelangende Werkzeug kälter, wärmer oder gleich warm sein kann wie die erhitzte Formteiloberfläche.

Gemäß einer weiteren Variante dieser zweiten Ausführungsform kann das Formteil nach seiner Herstellung der Form entnommen werden und anschließend in einem geeigneten Werkzeug, welches auf die Temperatur der erfindungsgemäßen Oberflächenbehandlung erhitzt ist, einer Druckbehandlung unterzogen zu werden.

Bei allen Ausführungsformen und Varianten des erfindungsgemäßen Verfahrens ist die Anwendung einer erhöhten Temperatur innerhalb der obengenannten Bereiche wesentlich, während die Druckbehand-

4

lung lediglich fakultativ ist.

Im Falle der Anwendung von Druck liegt dieser im allgemeinen im Bereich von 0,001 bis 800 bar, vorzugsweise von 1 bis 100 bar. Falls bei der Druckführung des erfindungsgemäßen Verfahrens neben der thermischen Oberflächenbehandlung gleichzeitig ein Druck auf das Formteil ausgeübt wird, wird vorzugsweise als Druck ausübendes Werkzeug ein solches verwendet, dessen mit dem Formteil in Berührung kommende Oberfläche besonders glatt ausgebildet ist, wobei jedoch auch die Verwendung von solchen Werkzeugen denkbar ist, die ein Relief tragen, um auf dem Formteil ein Muster, beispielsweise eine Inschrift zu erzeugen.

Die Dauer der erfindungsgemäßen Oberflächenbehandlung hängt selbstverständlich von der Temperatur und dem zur Anwendung gelangenden Druck ab. Sie liegt im allgemeinen innerhalb des Zeitraums von 1 Sekunde bis 10 Minuten, vorzugsweise innerhalb des Zeitraums von 10 Sekunden bis 5 Minuten.

## Beispiel

(Herstellung von Polyisocyanat-Polyadditionsprodukten)

## A-Komponente:

77 Gew.-Teile eines Polyethertriols der OH-Zahl 28, hergestellt durch Propoxylierung von Trimethylolpropan und anschließende Ethoxylierung des Propoxylierungsprodukts (PO:EO-Gewichtsverhältnis = 83:17),

23 Gew.-Teile eines Gemischs aus 65 Gew.-Teilen 1-Methyl-3,5-diethyl-2,4-diaminobenzol und 35 Gew.-Teilen 1-Methyl-3,5-diethyl-2,6-diaminobenzol (DETDA),

0,3 Gew.-Teile Triethylendiamin und

0,1 Gew.-Teile eines handelsüblichen Zinnkatalysators (UL 28 der Firma Witco Co.) wurden zu einer A-Komponente vereinigt.

## B-Komponente:

Ein modifiziertes Polyisocyanat mit einem NCO-Gehalt von 24,5 %, hergestellt durch Umsetzung von 4,4'-Diisocyanatodiphenylmethan mit einer unterschüssigen Menge an Tripropylenglykol.

## Herstellung von Formteilen:

Zur Herstellung von Formteilen wurde eine Einkolben-Hochdruckdosieranlage mit MQ-Mischkopf (Maschinenfabrik Hennecke, Sankt Augustin) und Zwangssteuerung verwendet.

100 Gew.-Teile der A-Komponente und 51 Gew.-Teile der B-Komponente (NCO-Kennzahl = 100) wurden in mehreren Parallelversuchen jeweils unter Verwendung der genannten Mischapparatur innig miteinander vermischt und nach dem Prinzip der Reaktionsspritzgußtechnik in einer geschlossenen Plattenform zu Platten der Abmessung 300 x 200 x 4 mm verarbeitet. Die Rohstofftemperatur betrug hierbei 35 bis 40°C, die Formtemperatur lag bei 60°C. Vor Befüllen der Form wurden deren Innenwände jeweils mit einem handelsüblichen äußeren Trennmittel auf Wachsbasis (®Acmos-Fluoricon 36/34 der Firma Acmos) beschichtet. Die Einfüllzeit betrug 1,25 Sekunden, die Formstandzeit lag bei 30 Sekunden.

Auf diese Weise wurden plattenförmige Polyisocyanat-Polyadditionsprodukte der Dichte von 1,1 g/cm$^3$ erhalten.

## Oberflächenmodifizierung

Die nach obiger Methode hergestellten Platten wurden anschließend einer erfindungsgemäßen Oberflächenmodifizierung unterzogen:

Probe 1:

Unmodifizierte Referenzprobe

Probe 2:

In einer Presse (Modell 200 T der Fa. Schwabenthau) bei einem Druck von 0,5 bar und einer Temperatur von 150° C (untere Preßplatte) bzw. von 180° C (obere Preßplatte) für 2 Minuten belassen.

Probe 3:

In der gleichen Presse mit Luftspalt (ca. 1 mm) zwischen oberer Preßplatte und Prüfling bei einer Temperatur von 20° C (untere Preßplatte) bzw. 300° C (obere Preßplatte) für 6 Minuten belassen.

Anschließend wurde die mittlere Rauigkeit nach der Auflichtinterferenzmethode (Krug, Rienitz und Schulz, Interferenz-Mikroskopie, Akademie-Verlag Berlin (1961)), sowie für Proben 1 und 2 der Glanzgrad nach Gardener bestimmt.

| Probe | Grobstruktur der mittleren Rauigkeit (μm) | Feinstruktur der mittleren Rauigkeit (μm) | Glanzgrad |
|-------|-------------------------------------------|-------------------------------------------|-----------|
| 1 | 3-7 | 0,3-1 | 63 |
| 2 | ca. 0,3 | <0,1 | 93 |
| 3 | ca. 0,3 | ca. 1 | - |

## Ansprüche

1. Verfahren zur Oberflächenmodifizierung von nach dem Polyisocyanat-Polyadditionsverfahren durch Umsetzung von

A) organischen Polyisocyanaten mit

B) Verbindungen des Molekulargewichtsbereichs 401 bis 20 000 welche 2 bis 8 gegenüber Isocyanatgruppen reaktionsfähige Gruppen aufweisen und

C) Verbindungen des Molekulargewichtsbereichs 60 bis 400, die 2 bis 8 gegenüber Isocyanatgruppen reaktionsfähige Gruppen aufweisen

gegebenenfalls unter Mitverwendung von

D) den aus der Polyurethanchemie bekannten Hilfs-und Zusatzstoffen

in geschlossenen Formen hergestellten Formteilen, dadurch gekennzeichnet, daß man die zu modifizierende Oberfläche unter Einschmelzung und Einebnung der mikroskopischen Oberflächenstruktur auf eine Temperatur von mindestens 80° C erhitzt und gegebenenfalls gleichzeitig oder anschließend durch die Anwendung von äußerem Druck die hierdurch bewirkte Glättung der Oberfläche unterstützt.

2. Verfahren gemäß Anspruch 1, dadurch gekennzeichnet, daß man die Oberfläche auf 200 bis 400° C erhitzt und gleichzeitig auf den Formkörper einen äußeren Druck von 0,001 bis 800 bar einwirken läßt.

3. Verfahren gemäß Anspruch 1 und 2, dadurch gekennzeichnet, daß man als Polyisocyanat-Polyadditionsprodukte solche verwendet, die durch Umsetzung von

a) (cyclo)aliphatischen oder aromatischen Polyisocyanaten,

b) Verbindungen mit einem Molekulargewicht zwischen 1800 und 12 000, welche im statistischen Mittel mindestens 2,5 gegenüber Isocyanatgruppen reaktionsfähige Gruppen aufweisen, gegebenenfalls

c) Diaminen mit zwei primären und/oder sekundären aromatisch gebundenen Aminogruppen des Molekulargewichtsbereichs 108 bis 400,

sowie gegebenenfalls

d) Ethergruppen aufweisenden (Cyclo)alkanpolyolen und/oder (Cyclo)alkanpolyaminen des Molekulargewichtsbereichs 60 bis 1799

6

sowie gegebenenfalls unter Mitverwendung von

e) den aus der Polyurethanchemie an sich bekannten Hilfs- und Zusatzmitteln

unter Einbehaltung einer Isocyanatkennzahl von 60 bis 140 im Ein- oder Mehrstufenverfahren hergestellt worden sind, mit der Maßgabe, daß mindestens eine der Komponenten c) und/oder d) ein von 60 bis 400 liegendes Molekulargewicht aufweist und in einer solchen Menge mitverwendet wird, daß die Gesamtmenge an Komponenten c) und d) dieses Molekulargewichtsbereichs mindestens 5 Gew.-%, bezogen auf das Gewicht der Komponente b), beträgt.

4. Gemäß Anspruch 1 bis 3 erhaltene, oberflächenmodifizierte Formkörper.